# EUROPEAN PATENT APPLICATION

(11) **EP 4 807 621 A1**
(43) Date of publication of application: **16.09.2026**
(21) Application number: 24889141.8
(22) Date of filing: 07.11.2024
(51) Int. Cl.: G06K 19/077, B32B 15/092, B32B 7/12, B32B 17/04, B32B 17/06

(54) **SMART IC SUBSTRATE, SMART IC MODULE, AND IC CARD COMPRISING SAME**

(30) Priority: 07.11.2023 KR 20230153126
(71) Applicant: LG Innotek Co., Ltd., Seoul 07796 (KR)
(72) Inventor: KIM, Seung Joon, Seoul 07796 (KR); LEE, Ju Hee, Seoul 07796 (KR); LEE, Do Yun, Seoul 07796 (KR)
(74) Representative: DREISS Patentanwälte PartG mbB
(86) International application number: PCT/KR2024/017499
(87) International publication number: WO 2025/100955

(57) **Abstract**

A smart IC substrate according to an embodiment includes a substrate including a first surface and a second surface opposite to the first surface; a first bonding layer disposed on the first surface; a first metal layer disposed on the first bonding layer; a second bonding layer disposed on the second surface; a second metal layer disposed on the second bonding layer; a first plating layer disposed on one surface of the first metal layer; a second plating layer disposed on the other surface of the first metal layer; and a third plating layer disposed on one surface of the second metal layer, wherein the second bonding layer includes a first region and a second region, the second bonding layer has one surface contacting the second metal layer and the other surface contacting the substrate, the first region includes a bonding region, the second region overlaps at least one of the second metal layer and the third plating layer, and a surface roughness of one surface of the first region is greater than a surface roughness of one surface of the second region.

## Description

### Technical Field

An embodiment relates to a smart IC substrate, a smart IC module, and an IC card including the same.

### Background Art

An IC card is a plastic card in which an integrated circuit chip capable of storing and processing information is embedded. The IC card has an IC in which information required for the card is mounted, and transmits the information to a reader in the form of an electrical signal.

The IC card is manufactured by inserting a smart IC module into a body part of the card.

The smart IC module is classified into a single type or a dual type depending on an arrangement of a metal layer. The single type has a metal layer and a plating layer disposed only on one surface of a substrate. The dual type has a metal layer and a plating layer disposed on both surfaces of the substrate.

In addition, the smart IC module is classified into a contact type, a contactless type, a hybrid type, and a combi card according to a usage method of the card. The contact type card transmits and receives information by physical contact. The contactless type card transmits and receives information without physical contact. The hybrid card and the combi card include both the contact type and the contactless type functions.

Accordingly, the smart IC module includes a contact surface and a bonding surface. The contact surface is contacted with an external device, and a chip is disposed on the bonding surface. The bonding surface is inserted into the inside of the card body part.

The card body part includes a receiving part accommodating the smart IC module. An adhesive material is disposed inside the receiving part. The bonding surface and the card body part are bonded by the adhesive material.

When adhesion between the bonding surface and the card body part is reduced, the smart IC module may be separated from the inside of the receiving part. Accordingly, reliability of the smart card is reduced.

Therefore, a smart IC substrate, a smart IC module, and an IC card including the same having a new structure capable of solving the above problems are required.

As a prior art related to the smart IC substrate, Korean Patent Publication (KR10-2022-0110247) is disclosed.

### Disclosure

### Technical Problem

An embodiment provides a smart IC substrate, a smart IC module, and an IC card including the same having improved reliability.

### Technical Solution

A smart IC substrate according to an embodiment includes a substrate including a first surface and a second surface opposite to the first surface; a first bonding layer disposed on the first surface; a first metal layer disposed on the first bonding layer; a second bonding layer disposed on the second surface; a second metal layer disposed on the second bonding layer; a first plating layer disposed on one surface of the first metal layer; a second plating layer disposed on the other surface of the first metal layer; and a third plating layer disposed on one surface of the second metal layer, wherein the second bonding layer includes a first region and a second region, the second bonding layer has one surface contacting the second metal layer and the other surface contacting the substrate, the first region includes a bonding region, the second region overlaps at least one of the second metal layer and the third plating layer, and a surface roughness of one surface of the first region is greater than a surface roughness of one surface of the second region.

In addition, a surface free energy of the one surface of the first region is greater than a surface free energy of the one surface of the second region.

In addition, the first region does not overlap the second metal layer and the third plating layer, and the second region overlaps the second metal layer and the third plating layer.

In addition, the first region overlaps the third plating layer, and the second region overlaps the second metal layer.

In addition, an area of the first region is greater than an area of the second region.

In addition, a surface roughness and a surface free energy of the one surface of the first region are greater than those of the other surface of the first region.

In addition, a surface roughness and a surface free energy of the one surface of the first region increase from a central region of the second bonding layer toward an edge region.

In addition, a surface roughness and a surface free energy of the bonding region are greater than those of a region other than the bonding region.

In addition, a surface free energy of the one surface of the first region is 25 dyn/cm to 60 dyn/cm.

### Advantageous Effects

The smart IC substrate according to an embodiment includes a second bonding layer. A second metal layer and a third plating layer for forming a wiring pattern are disposed on the second bonding layer.

The second bonding layer is divided into a first region and a second region. The first region does not overlap at least one of the second metal layer and the third plating layer.

The second bonding layer is bonded to a card body. Specifically, the first region is bonded to the card body.

A surface roughness of the second bonding layer is related to a surface roughness of the second metal layer to be patterned. Specifically, after patterning the second metal layer, the surface roughness of the second bonding layer is formed similar to that of the second metal layer. Therefore, when the surface roughness of the second metal layer is small, the surface roughness of the second bonding layer also becomes small. Accordingly, bonding force between the smart IC substrate and the card body may be reduced.

Accordingly, the first region is surface-treated, and the second region is not surface-treated. Accordingly, the surface roughness and the surface free energy of the first region increase. Therefore, the surface roughness and the surface free energy of the first region are greater than those of the second region.

Accordingly, bonding force between the second bonding layer and the card body can be improved. Accordingly, bonding force between the smart IC module and the card body can be improved. Therefore, reliability of the IC card can be improved.

### Description of Drawings

FIG. 1 is a plan view of a first surface of a smart IC substrate according to an embodiment.
FIG. 2 is a plan view of a second surface of the smart IC substrate according to an embodiment.
FIG. 3 is a cross-sectional view taken along line A-A' of FIG. 2.
FIG. 4 is a cross-sectional view taken along line B-B' of FIG. 2.
FIG. 5 is a cross-sectional view taken along line C-C' of FIG. 2.
FIG. 6 is an enlarged view of region A and region B of FIG. 5.
FIG. 7 is a scanning electron microscope image of region A and region B of FIG. 5.
FIG. 8 is a plan view of a second surface of a smart IC module according to an embodiment.
FIG. 9 is a cross-sectional view taken along line D-D' of FIG. 5.
FIG. 10 is a cross-sectional view taken along line E-E' of FIG. 5.
FIG. 11 is a cross-sectional view taken along line E-E' of FIG. 5.
FIG. 12 is an exploded perspective view of an IC card according to an embodiment.

### Modes of the Invention

Hereinafter, embodiments of the present disclosure will be described in detail with reference to the accompanying drawings. However, the spirit and scope of the present disclosure is not limited to a part of the embodiments described, and may be implemented in various other forms, and within the spirit and scope of the present disclosure, one or more of the elements of the embodiments may be selectively combined and redisposed.

In addition, unless expressly otherwise defined and described, the terms used in the embodiments of the present disclosure (including technical and scientific terms) may be construed the same meaning as commonly understood by one of ordinary skill in the art to which the present disclosure belongs, and the terms such as those defined in commonly used dictionaries may be interpreted as having a meaning that is consistent with their meaning in the context of the relevant art.

In addition, the terms used in the embodiments of the present disclosure are for describing the embodiments and are not intended to limit the present disclosure. In this specification, the singular forms may also include the plural forms unless specifically stated in the phrase, and may include at least one of all combinations that may be combined in A, B, and C when described in "at least one (or more) of A (and), B, and C".

Further, in describing the elements of the embodiments of the present disclosure, the terms such as first, second, A, B, (a), and (b) may be used. These terms are only used to distinguish the elements from other elements, and the terms are not limited to the essence, order, or order of the elements.

In addition, when an element is described as being "connected", "coupled", or "contacted" to another element, it may include not only when the element is directly "connected" to, "coupled" to, or "contacted" to other elements, but also when the element is "connected", "coupled", or "contacted" by another element between the element and other elements.

In addition, when described as being formed or disposed "on (over)" or "under (below)" of each element, the "on (over)" or "under (below)" may include not only when two elements are directly connected to each other, but also when one or more other elements are formed or disposed between two elements.

Further, when expressed as "on (over)" or "under (below)", it may include not only the upper direction but also the lower direction based on one element.

Hereinafter, a smart IC substrate, a smart IC module, and a smart IC card including the same according to embodiments will be described with reference to the drawings.

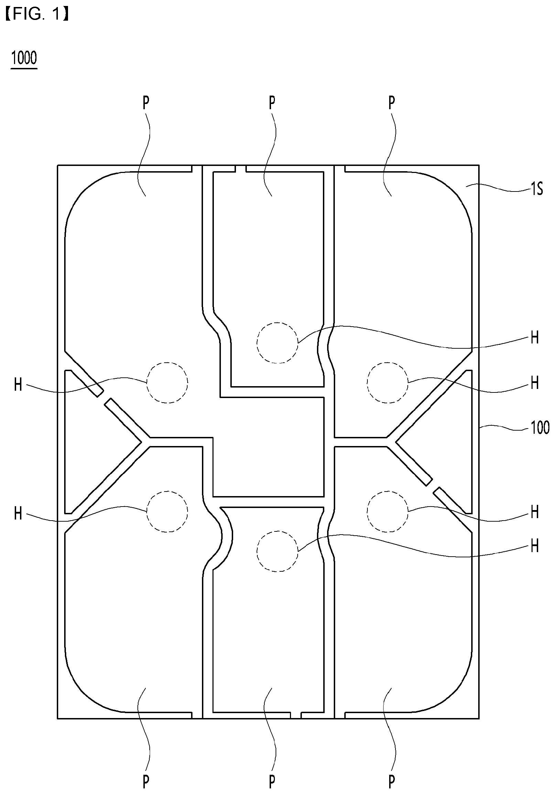

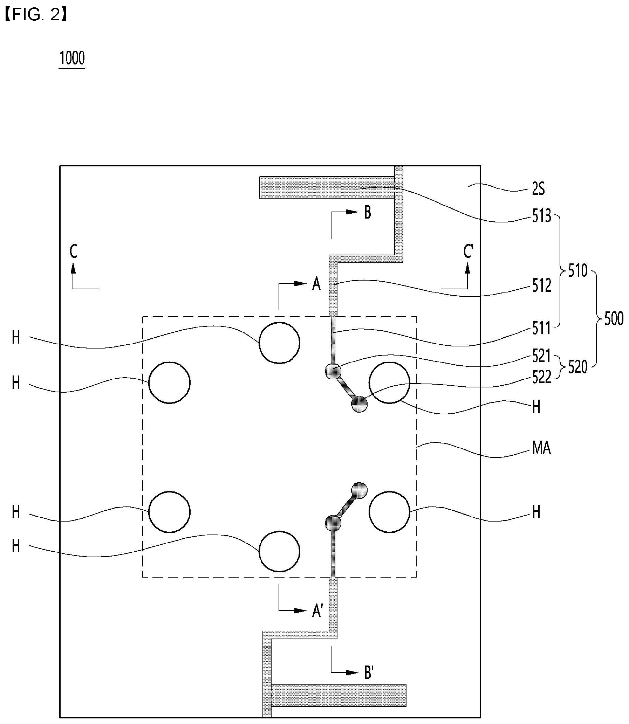

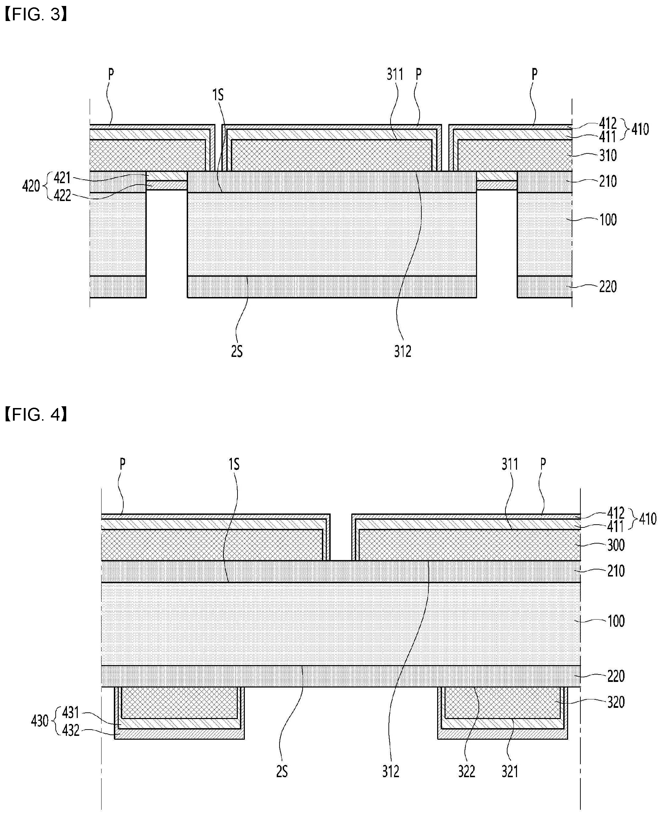

Referring to FIG. 1 to FIG. 7, a smart IC substrate 1000 according to an embodiment includes a substrate 100, bonding layers 210 and 220, metal layers 310 and 320, and plating layers.

The substrate 100 includes a first surface 1S and a second surface 2S. The first surface 1S and the second surface 2S are surfaces opposite to each other.

The first surface 1S is a contact surface. Specifically, the first surface 1S is a surface capable of recognizing information of the smart IC module by direct or indirect contact. In addition, the second surface 2S is a bonding surface. Specifically, the second surface 2S is a surface on which a chip is mounted and bonded to a body of the IC card.

The substrate 100 includes a resin material. The substrate 100 may include a prepreg including glass fibers. Specifically, the substrate 100 may include a material in which glass fibers and silicon-based filler are dispersed inside an epoxy resin.

Alternatively, the substrate 100 may be rigid or flexible. For example, the substrate 100 may include glass or plastic. Specifically, the substrate 100 may include chemically strengthened or semi-strengthened glass such as soda lime glass or aluminosilicate glass. Alternatively, the substrate 100 may include polyimide (PI), polyethylene terephthalate (PET), propylene glycol (PPG), polycarbonate (PC), or sapphire.

Alternatively, the substrate 100 may include an optically isotropic film. For example, the substrate 100 may include cyclic olefin copolymer (COC), cyclic olefin polymer (COP), optically isotropic polycarbonate (PC), or optically isotropic polymethyl methacrylate (PMMA).

Alternatively, the substrate 100 may be bent while partially having a curved surface. That is, the substrate 100 may be bent while partially having a planar surface and partially having a curved surface. Specifically, an end of the substrate 100 may be bent while having a curved surface. Alternatively, the substrate 100 may be bent while having a random curvature.

The substrate 100 may have a thickness within a set range. For example, a thickness of the substrate 100 may be 80 µm to 150 µm, 90 µm to 140 µm, or 100 µm to 120 µm. If the thickness of the substrate 100 is less than 80 µm, supporting force of the substrate 100 decreases. If the thickness of the substrate 100 exceeds 150 µm, the thickness of the smart IC substrate may increase. Accordingly, a size of the IC card increases.

The substrate 100 has insulation properties. Accordingly, the substrate 100 prevents a short circuit between circuits. In addition, the substrate 100 serves to support the circuits during a process of forming the circuits.

The substrate 100 includes holes. Specifically, the substrate 100 includes a plurality of holes H.

At least one hole among the plurality of holes is a region in which wire bonding is performed. For example, all of the plurality of holes may be regions in which wire bonding is performed. Alternatively, some of the plurality of holes may be regions in which wire bonding is performed. The chip C and the plating layer are wire-bonded through the holes H.

The holes H have a width within a set range. The width of the holes H may be defined as a diameter of the hole or a minimum distance between inner surfaces of the hole. For example, the width of the holes H may be 500 µm to 1000 µm, 600 µm to 900 µm, or 700 µm to 800 µm. If the width of the holes H is less than 500 µm, wire bonding through the holes H becomes difficult. If the width of the holes H exceeds 1000 µm, supporting force of the substrate 100 decreases.

The bonding layers 210 and 220 are disposed on the substrate 100. The bonding layers include a first bonding layer 210 and a second bonding layer 220. The first bonding layer 210 is disposed on the first surface 1S. The second bonding layer 220 is disposed on the second surface 2S.

The bonding layers 210 and 220 include a resin material. For example, the bonding layers 210 and 220 may include at least one of epoxy resin, acrylic resin, and polyimide resin. In addition, the bonding layers 210 and 220 may include at least one additive among natural rubber, plasticizer, curing agent, and phosphorus-based flame retardant. Accordingly, flexibility of the bonding layers 210 and 220 is improved.

The bonding layers 210 and 220 may have a thickness within a set range. For example, a thickness of the bonding layers 210 and 220 may be 15 µm to 35 µm, 20 µm to 30 µm, or 22 µm to 28 µm. If the thickness of the bonding layers 210 and 220 is less than 15 µm, adhesive force of the bonding layers 210 and 220 decreases. Accordingly, the metal layer on the bonding layer 200 may be peeled off. In addition, if the thickness of the bonding layers 210 and 220 exceeds 35 µm, the thickness of the smart IC substrate may increase. Accordingly, the size of the IC card increases.

The metal layers 310 and 320 are disposed on the substrate 100. The metal layers include a first metal layer 310 and a second metal layer 320. The first metal layer 310 is disposed on the first bonding layer 210. The second metal layer 320 is disposed on the second bonding layer 220.

The metal layers 310 and 320 include a metal material. For example, the metal layers 310 and 320 may include at least one material among gold (Au), silver (Ag), platinum (Pt), titanium (Ti), tin (Sn), copper (Cu), and zinc (Zn). Preferably, the metal layers 310 and 320 include copper.

The metal layers 310 and 320 may have a thickness within a set range. For example, a thickness of the metal layers 310 and 320 may be 30 µm to 75 µm, 40 µm to 65 µm, or 50 µm to 60 µm. If the thickness of the metal layers 310 and 320 is less than 30 µm, resistance of the metal layers 310 and 320 increases. In addition, if the thickness of the metal layers 310 and 320 exceeds 75 µm, the thickness of the smart IC substrate may increase. Accordingly, the size of the IC card increases. In addition, process efficiency may decrease.

The metal layers 310 and 320 form a conductive pattern P and a wiring pattern 500.

The first metal layer 310 forms a plurality of conductive patterns P. The conductive patterns P are formed by patterning the metal layer 300.

The conductive patterns P are disposed on the first surface 1S. The conductive patterns P are disposed on the first bonding layer 210. The conductive patterns P are disposed on the contact surface.

The conductive patterns P are disposed to be spaced apart from each other. The holes H are disposed in regions corresponding to the respective conductive patterns P.

The second metal layer 320 forms the wiring pattern 500.

The wiring pattern 500 is disposed on the second surface 2S, and the wiring pattern 500 is disposed on the second bonding layer 220. The wiring pattern 500 is disposed on the bonding surface.

The wiring pattern 500 is connected to an external antenna pattern. Accordingly, the smart IC module can be driven in a contactless manner.

The wiring pattern 500 may include a wiring part 510 and a connection part 520.

The wiring part 510 may include a first wiring part 511, a second wiring part 512, and a third wiring part 513. The first wiring part 511 and the connection part 520 are disposed inside a molding region MA. The second wiring part 512 and the third wiring part 513 are disposed outside the molding region MA.

The first wiring part 511 and the third wiring part 513 may be connected by the second wiring part 512.

The first wiring part 511, the second wiring part 512, and the third wiring part 513 may have different line widths. For example, a line width of the second wiring part 512 may be greater than a line width of the first wiring part 511. Accordingly, after disposing a molding part M inside the molding region MA, it is possible to prevent damage to the wiring part disposed outside the molding part M.

A line width of the third wiring part 513 may be greater than the line widths of the first wiring part 511 and the second wiring part 512. The third wiring part 513 is a region connected to an antenna pattern. Since the line width of the third wiring part 513 is formed to be large, the smart IC substrate and the antenna pattern can be easily connected.

The connection part 520 may include a first connection part 521 and a second connection part 522. Specifically, at least one wiring pattern among the plurality of wiring patterns may include the first connection part 521 and the second connection part 522.

Sizes of the first connection part 521 and the second connection part 522 may be smaller than a size of the hole H. In addition, a size of the second connection part 522 may be smaller than a size of the third wiring part 513. For example, an area of the second connection part 522 may be smaller than an area of the third wiring part 513. Accordingly, a space of a chip mounting region can be widely secured, and a packaging size may be reduced.

Further, the first connection part 521 or the second connection part 522 is wire-bonded to the chip. The connection part includes two or more connection parts. Accordingly, when a problem occurs in wire bonding at one connection part, the problem can be solved by additionally performing wire bonding on another connection part. For example, when a problem occurs in wire bonding of the first connection part 521, additional wire bonding may be performed to the second connection part 522.

The plating layers are disposed on the metal layer 300. The plating layers may include a first plating layer 410, a second plating layer 420, and a third plating layer 430.

The first plating layer 410, the second plating layer 420, and the third plating layer 430 are distinguished according to positions. The first plating layer 410, the second plating layer 420, and the third plating layer 430 are disposed at different positions from each other.

The first plating layer 410 is disposed on one surface 311 of the first metal layer 310. The second plating layer 420 is disposed on the other surface 312 of the first metal layer 310. The second plating layer 420 is disposed in a region overlapping the hole H. The second plating layer 420 may be a pad part to which the wire is bonded. The third plating layer 430 is disposed on one surface 321 of the second metal layer 320. The wiring pattern 500 is formed by the second metal layer 320 and the third plating layer 430. The third plating layer 430 may be a pad part to which the wire is bonded.

The first plating layer 410 includes a first-first layer 411 and a first-second layer 412. The first-first layer 411 contacts the first metal layer 310. The first-second layer 412 contacts the first-first layer 411. Accordingly, the first-first layer 411 is disposed between the first metal layer 310 and the first-second layer 412.

Although not illustrated in the drawings, an organic coating layer may be disposed on the first-second layer 412. The organic coating layer protects the first-second layer 412. Accordingly, corrosion of the first-second layer 412 can be prevented.

The second plating layer 420 includes a second-first layer 421 and a second-second layer 422. The second-first layer 421 contacts the first metal layer 310. The second-second layer 422 contacts the second-first layer 421. Accordingly, the second-first layer 421 is disposed between the first metal layer 310 and the second-second layer 422.

The third plating layer 430 includes a third-first layer 431 and a third-second layer 432. The third-first layer 431 contacts the second metal layer 320. The third-second layer 432 contacts the third-first layer 431. Accordingly, the third-first layer 431 is disposed between the second metal layer 320 and the third-second layer 432.

The first-first layer 411 and the second-first layer 421 may include a same material. Specifically, the first-first layer 411 and the second-first layer 421 may include the same metal. For example, the first-first layer 411 and the second-first layer 421 may include nickel.

The first-second layer 412 and the second-second layer 422 may include a same material. Specifically, the first-second layer 412 and the second-second layer 422 may include a same metal. For example, the first-second layer 412 and the second-second layer 422 may include gold (Au) or palladium (Pd).

The first plating layer 410 and the second plating layer 420 may have different sizes. Specifically, a thickness T1 of the first plating layer 410 and a thickness T2 of the second plating layer 420 may be different.

The thickness T2 of the second plating layer 420 is greater than the thickness T1 of the first plating layer 410. A thickness T1-1 of the first-first layer 411 and a thickness T2-1 of the second-first layer 421 may be different. Specifically, the thickness T1-1 of the first-first layer 411 may be smaller than the thickness T2-1 of the second-first layer 421. In addition, a thickness T1-2 of the first-second layer 412 and a thickness T2-2 of the second-second layer 422 may be different. Specifically, the thickness T1-2 of the first-second layer 412 may be smaller than the thickness T2-2 of the second-second layer 422. Accordingly, the thickness T2 of the second plating layer 420 is greater than the thickness T1 of the first plating layer 410.

The third plating layer 430 may include the same material as the second plating layer 420. For example, the third-first layer 431 may include nickel. In addition, the third-second layer 432 may include gold (Au) or palladium (Pd).

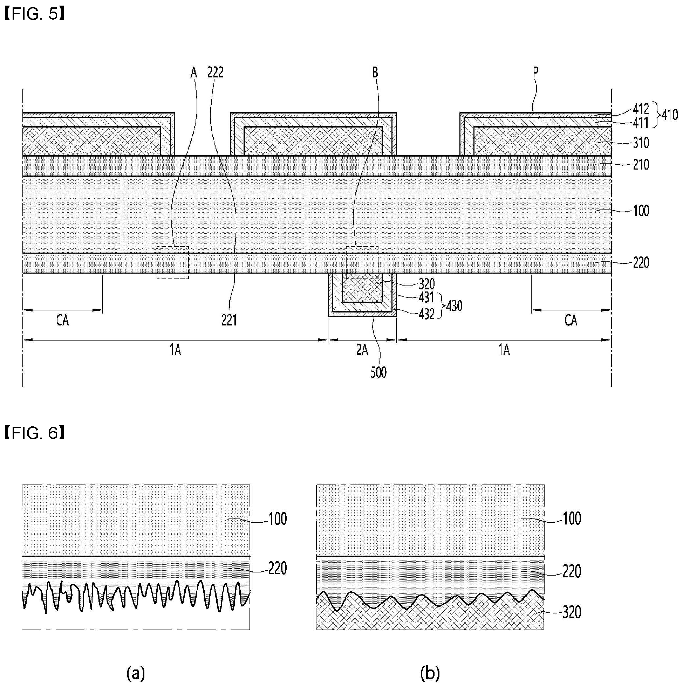

Referring to FIG. 5, the second bonding layer 220 may be divided into a first region 1A and a second region 2A. The first region 1A and the second region 2A are divided by the wiring pattern 500. The wiring pattern 500 is formed by the second metal layer 320 and the third plating layer 430.

The first region 1A is a region in which the wiring pattern 500 is not disposed. The second region 2A is a region in which the wiring pattern 500 is disposed. The second region 2A overlaps at least one of the second metal layer 320 and the third plating layer 430.

The first region 1A includes a bonding region CA. The bonding region CA may be disposed at an edge of the second bonding layer 220. For example, the bonding region CA may be disposed at two edges facing each other, or the bonding region CA may extend along an edge of the second bonding layer 220.

An area of the first region 1A is different from an area of the second region 2A. For example, the area of the first region 1A may be greater than the area of the second region 2A.

The first region 1A is a surface that is surface-treated. The second region 2A is a surface that is not surface-treated.

The second bonding layer 220 has one surface 221 and the other surface 222 opposite to the one surface 221. The one surface 221 contacts the wiring pattern 500. The other surface 222 contacts the substrate 100.

Surface roughness of the other surface 222 may be entirely the same or similar. In addition, surface free energy of the other surface 222 may be entirely the same or similar.

Surface roughness of the one surface 221 may vary depending on regions. In addition, surface free energy of the one surface 221 may vary depending on regions.

The first region 1A may have different surface roughnesses on the one surface and the other surface. Specifically, surface roughness of the one surface of the first region 1A may be greater than surface roughness of the other surface of the first region 1A. In addition, the first region 1A may have different surface free energies on the one surface and the other surface. Specifically, surface free energy of the one surface of the first region 1A may be greater than surface free energy of the other surface of the first region 1A.

The second region 2A may have the same or similar surface roughnesses on the one surface and the other surface. In addition, the second region 2A may have the same or similar surface free energies on the one surface and the other surface.

Surface roughnesses of the other surface of the first region 1A and the other surface of the second region 2A may be the same or similar. Surface free energies of the other surface of the first region 1A and the other surface of the second region 2A may be the same or similar.

Surface roughnesses of the one surface of the first region 1A and the one surface of the second region 2A may be different. Surface roughness of the one surface of the first region 1A may be greater than surface roughness of the one surface of the second region 2A.

Surface free energies of the one surface of the first region 1A and the one surface of the second region 2A may be different. Surface free energy of the one surface of the first region 1A may be greater than surface free energy of the one surface of the second region 2A.

For example, surface free energy of the one surface of the first region 1A may be 25 dyn/cm or more. Specifically, surface free energy of the one surface of the first region 1A may be 25 to 60 dyn/cm, 30 to 50 dyn/cm, or 35 to 45 dyn/cm.

Further, surface free energy of the one surface of the second region 2A may be less than 25 dyn/cm. Specifically, surface free energy of the one surface of the second region 2A may be greater than 0 and less than 25 dyn/cm.

The surface free energy was measured using DSA305 equipment. The surface free energy was measured by OWRK calculation.

The second metal layer 320 is disposed on the one surface 221. The second metal layer 320 is patterned to form the wiring pattern 500. Thereafter, the third plating layer 430 is formed on an outer surface of the patterned second metal layer 320.

When the process proceeds in this manner, the first region 1A is defined as a region not overlapping the second metal layer 320 and the third plating layer 430.

Thereafter, the one surface 221 may be pretreated. For example, the one surface 221 may be wet-treated. For example, the one surface 221 may be treated by a de-smear process.

Accordingly, the first region 1A is surface-treated. Therefore, surface roughness of the first region 1A increases. In addition, surface free energy of the first region 1A increases.

The first region 1A includes the bonding region CA. Surface roughness and surface free energy of the bonding region CA also increase. Accordingly, when the bonding region CA and a receiving part of the card body are bonded, bonding force between the second bonding layer 220 and the receiving part increases.

A process order on the one surface 221 may be different. For example, the second metal layer 320 is disposed on the one surface 221. The second metal layer 320 is patterned to form the wiring pattern 500. Thereafter, the one surface 221 may be pretreated. For example, the one surface 221 may be wet-treated. For example, the one surface 221 may be treated by a de-smear process. Thereafter, the third plating layer 430 is formed on an outer surface of the patterned second metal layer 320.

When the process proceeds in this manner, the first region 1A is defined as a region not overlapping the second metal layer 320. In addition, the first region 1A overlaps the third plating layer 430.

The first region 1A includes the bonding region CA. Surface roughness and surface free energy of the bonding region CA also increase. Accordingly, when the bonding region CA and the receiving part of the card body are bonded, bonding force between the second bonding layer 220 and the receiving part increases.

Further, the second bonding layer 220 is non-metal, and the third plating layer 430 is metal. Accordingly, bonding force between the second bonding layer 220 and the third plating layer 430 may decrease.

The third plating layer 430 is disposed on the first region 1A. Accordingly, the third plating layer 430 is disposed on the surface-treated second bonding layer 220. Accordingly, bonding force between the third plating layer 430 and the second bonding layer 220 may increase.

Surface roughness and surface free energy of the one surface 221 of the first region 1A may vary for each region. For example, the surface roughness and the surface free energy of the one surface 221 may be greatest in the bonding region CA. For example, the surface roughness and the surface free energy of the one surface 221 may increase while extending from a central region of the second bonding layer 220 toward an edge region.

Accordingly, surface roughness and surface free energy of the one surface 221 of the bonding region CA become greater than those of other regions. Therefore, bonding force between the second bonding layer 220 and the card body is improved.

The first region 1A may selectively include a region having large surface roughness and surface free energy.

For example, surface roughness and surface free energy of the one surface 221 of the bonding region CA may be greater than those of the one surface 221 of the first region other than the bonding region CA and the one surface 221 of the second region. That is, surface roughness and surface free energy of the one surface of the first region other than the bonding region CA may be the same as or similar to those of the one surface of the second region.

Accordingly, surface roughness and surface free energy of the bonding region CA become greater than those of other regions. Therefore, bonding force between the second bonding layer 220 and the card body is improved.

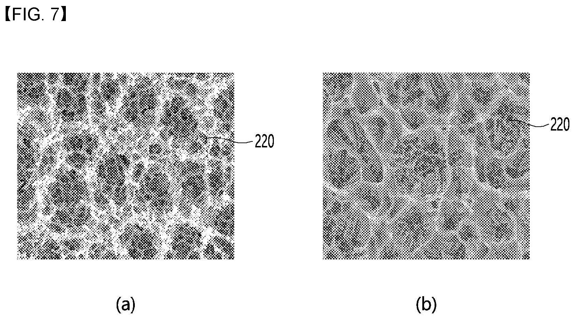

FIG. 6 and FIG. 7 are views for comparing the one surface 221 of the first region 1A and the second region 2A.

FIG. 6(a) and FIG. 7(a) are views of the first region 1A. FIG. 6(b) and FIG. 7(b) are views of the second region 2A.

Referring to FIG. 6 and FIG. 7, the first region 1A is surface-treated. Accordingly, surface roughness and surface free energy of the one surface 221 of the first region 1A increase. In addition, the second region 2A is not surface-treated. Accordingly, surface roughness and surface free energy of the one surface 221 of the second region 2A are smaller than those of the first region 1A.

The smart IC substrate according to an embodiment includes the second bonding layer. The second metal layer and the third plating layer for forming the wiring pattern are disposed on the second bonding layer.

The second bonding layer is divided into the first region and the second region. The first region does not overlap at least one of the second metal layer and the third plating layer.

The second bonding layer is bonded to the card body. Specifically, the first region is bonded to the card body.

Surface roughness of the second bonding layer is related to surface roughness of the second metal layer to be patterned. Specifically, after the second metal layer is patterned, the surface roughness of the second bonding layer is formed similarly to the surface roughness of the second metal layer. Therefore, when the surface roughness of the second metal layer is small, surface roughness of the second bonding layer also becomes small. Accordingly, bonding force between the smart IC substrate and the card body may decrease.

Accordingly, the first region is surface-treated. The second region is not surface-treated. Accordingly, surface roughness and surface free energy of the first region increase. Therefore, surface roughness and surface free energy of the first region become greater than those of the second region.

Therefore, bonding force between the second bonding layer 220 and the card body increases. Accordingly, bonding force between the smart IC module and the card body increases. Therefore, reliability of the IC card may increase.

Hereinafter, the present invention will be described in detail through Example and Comparative Example.

### Example

The smart IC substrate described above is manufactured.

Thereafter, a surface of the second bonding layer is surface-treated. Specifically, the surface of the second bonding layer is surface-treated by a de-smear process.

Thereafter, the second bonding layer and the card body are bonded. Specifically, an adhesive layer is disposed inside a receiving part of the card body. The second bonding layer and the card body are bonded by the adhesive layer.

Thereafter, adhesive force between the second bonding layer and the card body is measured using BFG-200N equipment.

The adhesive force is measured at a peel speed of 10 mm/min, an angle of 90 degrees, and a peel max load of 20 kgf.

### Comparative Example

The second bonding layer and the card body are bonded without surface-treating the second bonding layer.

Thereafter, adhesive force between the second bonding layer and the card body is measured by the same method as in Example.

**[Table 1]**

| | Example | Comparative Example |
|---|---|---|
| Surface free energy (dyn/cm) | 59.72 | 23.36 |
| Peel Strength (gf/mm) | 2378 | 1412.5 |

Referring to Table 1, it can be seen that the surface free energy of Example is greater than the surface free energy of Comparative Example. In addition, it can be seen that adhesive force of Example is greater than adhesive force of Comparative Example.

In Example, the second bonding layer is surface-treated. Accordingly, surface free energy of the second bonding layer increases. Therefore, since adhesion with the adhesive layer is improved, adhesive force between the smart IC substrate and the card body may increase.

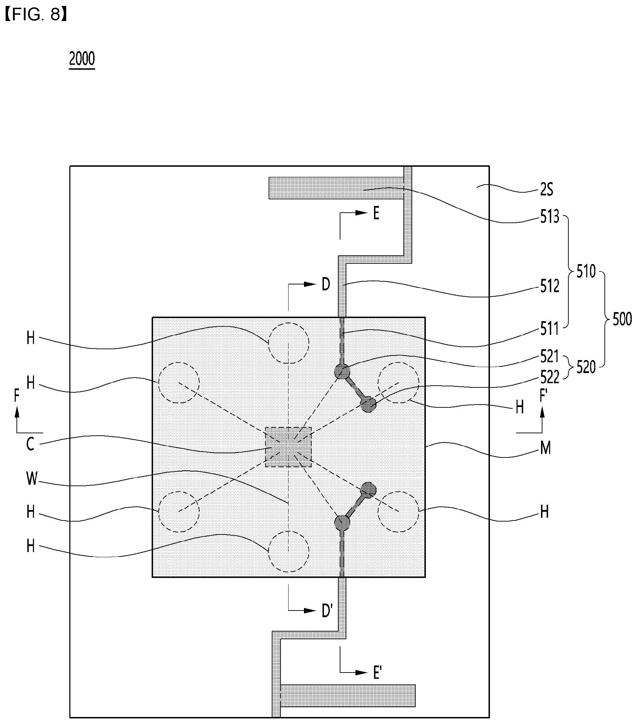

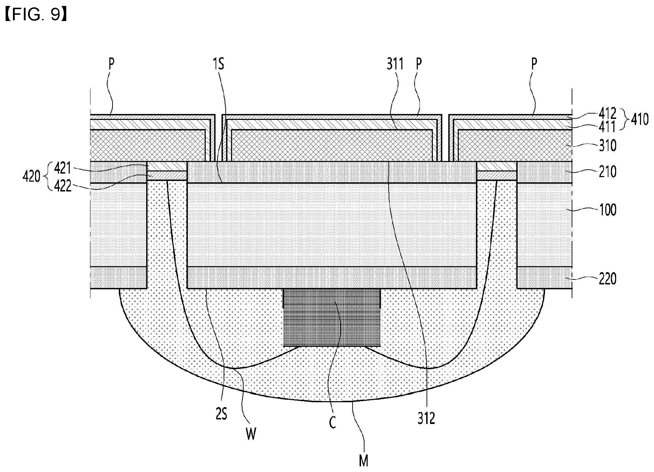

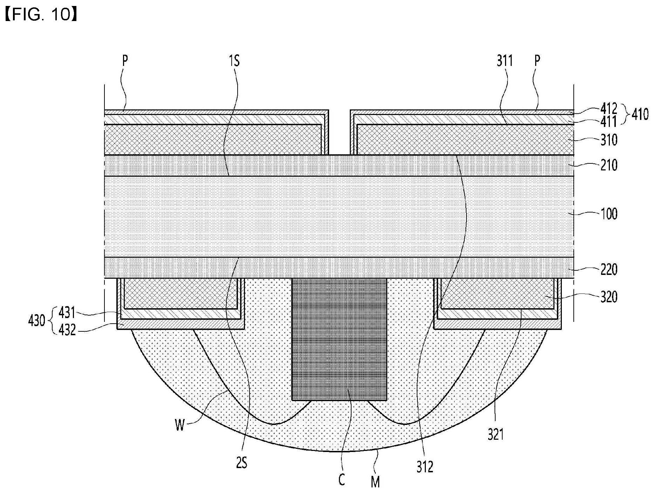

Hereinafter, a smart IC module according to an embodiment will be described with reference to FIG. 8 to FIG. 10.

Referring to FIG. 8 to FIG. 10, the smart IC module 2000 includes the smart IC substrate 1000 described above and a chip C.

The chip C is disposed on the second bonding layer 220.

The chip C is connected to the second plating layer 420 and the third plating layer 430. Specifically, the chip C and the second plating layer 430 are wire-bonded by a wire W. Accordingly, the chip C and the conductive patterns P are electrically connected. In addition, the chip C and the third plating layer 430 are wire-bonded by the wire W. Accordingly, the chip C and the antenna pattern are electrically connected by the wiring pattern 500.

A molding member M is disposed on the chip C. The molding member M is disposed while covering the chip C and the wire W. Accordingly, damage to the wire due to external impact can be prevented.

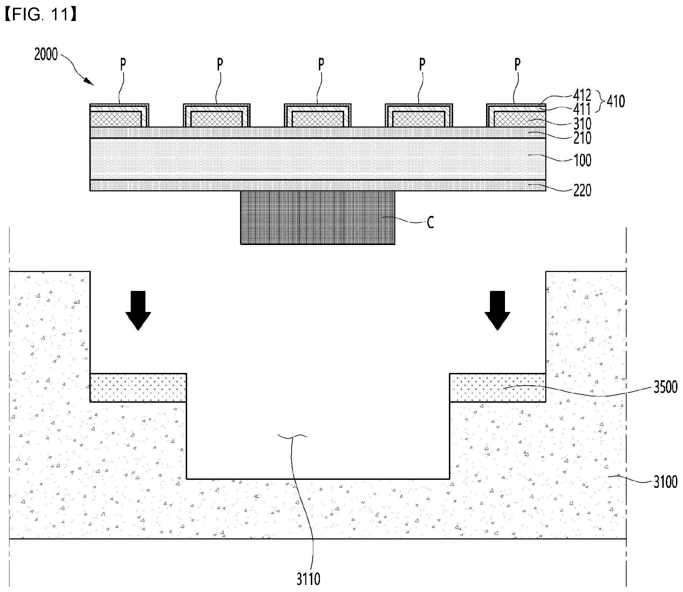

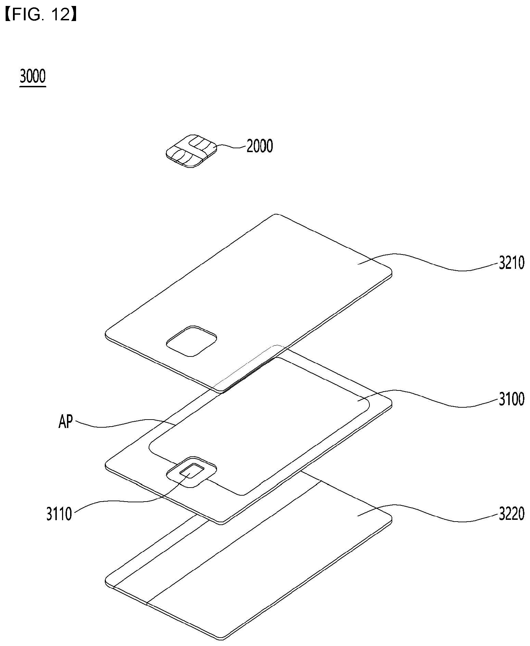

Hereinafter, an IC card according to an embodiment will be described with reference to FIG. 11 and FIG. 12.

Referring to FIG. 11 and FIG. 12, the IC card 3000 may include a body part 3100, an upper layer 3210, and a lower layer 3220.

The body part 3100 includes a receiving part 3110. The smart IC module 2000 is disposed inside the receiving part 3110.

The IC card can be driven in various modes. For example, the IC card can be driven as a contact-type card.

Alternatively, an antenna pattern (not shown) may be disposed on the body part 3100. Specifically, the antenna pattern may be disposed in a coil shape at an edge of the body part 3100. Accordingly, the IC card can be driven as a contactless card, a combi card, or a hybrid card.

The smart IC module 2000 is inserted into the inside of the receiving part 3110. The smart IC module 2000 and the body part 3100 are bonded by an adhesive layer 3500. Accordingly, the smart IC module 2000 is inserted into and fixed in the receiving part 3110.

Specifically, the body part 3100 is bonded to the second bonding layer 220. The body part 3100 is bonded to the first region 1A. The first region 1A is surface-treated. Therefore, adhesive force between the smart IC module 2000 and the body part 3100 is improved.

The upper layer 3210 is disposed on an upper portion of the body part 3100. The upper layer 3210 may include a transparent material. The upper layer 3210 may include a transparent resin material. The upper layer 3210 may be disposed as at least one layer. That is, the upper layer 3210 may include a plurality of layers.

The lower layer 3220 is disposed on a lower portion of the body part 3100. A magnetic stripe may be disposed on the lower layer 3220. The lower layer 3220 may include a transparent material. The lower layer 3220 may include a transparent resin material. The lower layer 3220 may be disposed as at least one layer. That is, the lower layer 3220 may include a plurality of layers.

The characteristics, structures and effects described in the embodiments above are included in at least one embodiment but are not limited to one embodiment. Furthermore, the characteristics, structures, and effects and the like illustrated in each of the embodiments may be combined or modified even with respect to other embodiments by those of ordinary skill in the art to which the embodiments pertain. Thus, it should be construed that contents related to such a combination and such a modification are included in the scope of the embodiment.

The description has been focused on the embodiment, but it is merely illustrative and does not limit the embodiment. A person skilled in the art to which the embodiment pertains may appreciate that various modifications and applications not illustrated above are possible without departing from the essential features of the embodiment. For example, each component particularly represented in the embodiment may be modified and implemented. In addition, it should be construed that differences related to such changes and applications are included in the scope of the embodiment defined in the appended claims.

## Claims

1. A smart IC substrate comprising:
a substrate including a first surface and a second surface opposite to the first surface;
a first bonding layer disposed on the first surface;
a first metal layer disposed on the first bonding layer;
a second bonding layer disposed on the second surface;
a second metal layer disposed on the second bonding layer;
a first plating layer disposed on one surface of the first metal layer;
a second plating layer disposed on the other surface of the first metal layer; and
a third plating layer disposed on one surface of the second metal layer,
wherein the second bonding layer includes a first region and a second region,
wherein the second bonding layer has one surface contacting the second metal layer and the other surface contacting the substrate,
wherein the first region includes a bonding region,
wherein the second region overlaps at least one of the second metal layer and the third plating layer, and
wherein a surface roughness of one surface of the first region is greater than a surface roughness of one surface of the second region.

2. The smart IC substrate of claim 1, wherein a surface free energy of the one surface of the first region is greater than a surface free energy of the one surface of the second region.

3. The smart IC substrate of claim 1, wherein the first region does not overlap the second metal layer and the third plating layer, and
wherein the second region overlaps the second metal layer and the third plating layer.

4. The smart IC substrate of claim 1, wherein the first region overlaps the third plating layer, and
wherein the second region overlaps the second metal layer.

5. The smart IC substrate of claim 1, wherein an area of the first region is greater than an area of the second region.

6. The smart IC substrate of claim 1, wherein a surface roughness and a surface free energy of the one surface of the first region are greater than those of the other surface of the first region.

7. The smart IC substrate of claim 1, wherein a surface roughness and a surface free energy of the one surface of the first region increase from a central region of the second bonding layer toward an edge region.

8. The smart IC substrate of claim 1, wherein a surface roughness and a surface free energy of the bonding region are greater than those of a region other than the bonding region.

9. The smart IC substrate of claim 1, wherein a surface free energy of the one surface of the first region is 25 dyn/cm to 60 dyn/cm.

10. A smart IC module comprising:
the smart IC substrate according to any one of claims 1 to 9; and
a chip disposed on the second surface or the other surface of the first metal layer,
wherein the chip is wire-bonded to the second plating layer or a fourth plating layer.
